(19) Europäisches Patentamt
European Patent Office
Office européen des brevets

(11) EP 0 530 894 B1

(12) EUROPEAN PATENT SPECIFICATION

(45) Date of publication and mention of the grant of the patent:
**14.05.1997 Bulletin 1997/20**

(51) Int Cl.[6]: **C08L 73/00**, C08G 67/02

(21) Application number: **92202552.3**

(22) Date of filing: **20.08.1992**

(54) **A composition comprising a polymer of carbon monoxide with ethylenically unsaturated compounds**

Zusammensetzung aus einem Polymer aus Kohlenmonoxid und ethylenisch ungesättigten Verbindungen

Composition comprenant un polymère de monoxyde de carbone et des composés éthyléniquement insaturés

(84) Designated Contracting States:
**BE DE FR GB IT NL**

(30) Priority: **22.08.1991 US 748404**

(43) Date of publication of application:
**10.03.1993 Bulletin 1993/10**

(73) Proprietor: **SHELL INTERNATIONALE RESEARCH MAATSCHAPPIJ B.V.**
**2596 HR Den Haag (NL)**

(72) Inventors:
- **Machado, Joseph Michael**
  **Destrehan, Louisiana 70047 (US)**
- **French, Raymond Nicholas**
  **Missouri City, Texas 77459 (US)**

(56) References cited:
**FR-A- 2 149 932** **US-A- 4 900 789**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 530 894 B1

## Description

This invention relates to a composition comprising a blend of a linear alternating polymer of carbon monoxide with ethylenically unsaturated compound(s).

The class of polymers of carbon monoxide with olefins has been known for some time. More recently, the class of linear alternating polymers of carbon monoxide with at least one ethylenically unsaturated compound, now becoming known as polyketones or polyketone polymers, has become of greater interest. For example US-A-4,880,903 disclosed a linear alternating polyketone terpolymer of carbon monoxide, ethylene, and other olefinically unsaturated hydrocarbons, such as propylene.

The polyketone polymers possess an attractive set of properties for a variety of applications. The utility of these polymers can be further broadened by selectively blending polyketone polymers with other materials which have complimentary property sets. Most often this is accomplished with polymer blends which are immiscible (heterogeneous) on the molecular scale, yet well dispersed (compatible) on the macroscopic scale.

Immiscible, though compatible, blends are the most common polymer mixture. However, on rare occasions, polymer pairs will form miscible blends. The terms "miscible" and "molecularly miscible" will be used hereinafter to describe a mixture of two or more polymers that form a single-phase solution (solid or liquid) on a molecular scale within the amorphous phase. When one or both of the polymer blend components is capable of forming both a crystalline and an amorphous phase, then the term "miscible" refers only to the amorphous phase in which the separate components are capable of mixing on the molecular level. Molecularly miscible blends can be mixed such that they exhibit only one glass transition temperature, indicating a single amorphous phase. More specifically, molecularly miscible blends exhibit one glass transition temperature as measured by thermal analysis using a differential scanning calorimeter.

As miscible blends have different performance characteristics compared with immiscible blends, it is an object of this invention to provide a miscible blend of a polyketone polymer and a second polymer.

It has now surprisingly been found that the desired molecularly miscible blends can be obtained by blending together a mixture of a polyketone polymer with a vinyl aromatic/acrylonitrile copolymer which is rich in acrylonitrile.

The present invention therefore relates to a composition comprising a molecularly miscible polymer blend of a linear alternating polymer of carbon monoxide with at least one ethylenically unsaturated compound, with a copolymer of a vinyl aromatic monomer and acrylonitrile monomer, wherein the copolymer contains from 45 wt% to 80 wt% acrylonitrile monomer, relative to the weight of the copolymer.

The invention provides an advantage of suppressing the melting point of the polyketone polymer, thereby broadening its processing window, by the incorporation of the copolymer of a vinyl aromatic monomer and an acrylonitrile monomer into the polyketone polymer.

The present finding is surprising in view of US-A-4,956,412 which disclosed blends of a polyketone polymer and a copolymer of a vinyl aromatic monomer and an alkenyl nitrile monomer. The copolymer employed therein had an alkenyl nitrile content below about 40 wt% of the copolymer. Although the blends are described as uniform mixtures, with the copolymer dispersed within the polyketone polymer, the blends are also specifically described as non-miscible. The present finding is in particular surprising as it has recently been found that polyketone polymer shows no miscibility on a molecular scale with polymethacrylonitrile polymer.

The polyketone polymers of the blends of the invention are of a linear alternating structure and contain substantially one molecule of carbon monoxide for each molecule of unsaturated compound. The ethylenically unsaturated compound is preferably a hydrocarbon. Suitable ethylenically unsaturated hydrocarbons for use as precursors of the polyketone polymers have up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethylene or terpolymers of carbon monoxide, ethylene and a second ethylenically unsaturated hydrocarbon of at least 3 carbon atoms, particularly an α-olefin such as propylene.

When the preferred polyketone terpolymers are employed as a component of the blends of the invention, there will be within the terpolymer at least 2 units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polyketone terpolymers is therefore represented by the repeating formula

$$-\left[CO-\left(CH_2-CH_2\right)-\right]_x-\left[CO-\left(G\right)-\right]_y-$$

wherein G is the moiety of ethylenically unsaturated hydrocarbon of at least 3 carbon atoms polymerized through the ethylenic unsaturation and the ratio of y:x is less than 0.5.

The -CO$\{CH_2CH_2\}$ units and the -CO$\{G\}$ units are found randomly throughout the polymer chain, and preferred ratios of y:x are from 0.01 to 0.1. When copolymers of carbon monoxide and ethylene are employed in the blends of the invention, there will be no second hydrocarbon present and the copolymers are represented by the above formula wherein y is zero. The end groups of the polymer chain will depend upon the materials present during the production of the polymer and whether or how the polymer was purified. The precise nature of the end groups does not appear to influence the properties of the polymer to any considerable extent so that the preference polyketone polymers are fairly represented by the formula for the polymer chain as depicted above.

Of particular interest are the polyketone polymers which have a melting point of from 175°C to 300°C, more typically from 210°C to 270°C. The polymers have eligibly a limiting viscosity number (LVN), measured in m-cresol at 60°C in a standard capillary viscosity measuring device, from 0.5 dl/g to 10 dl/g, more frequently from 0.8 dl/g to 4 dl/g.

A preferred method for the production of the polyketone polymers is disclosed in US-A-4,843,144. Carbon monoxide and hydrocarbon monomer(s) are contacted under polymerization conditions in the presence of a catalyst composition formed from a compound of palladium, the anion of a non-hydrohalogenic acid having a pKa (measured in water at 18°C) of below about 6, preferably below 2, and a bidentate ligand of phosphorus. A preferred palladium compound is a palladium carboxylate, particularly palladium acetate, a preferred anion is the anion of trifluoroacetic acid or p-toluenesulfonic acid and a preferred bidentate ligand of phosphorus is 1,3-bis(diphenylphosphino)propane or 1,3-bis[bis(2-methoxyphenyl)phosphino]propane.

The polymerization to produce the polyketone polymer is typically conducted in an inert reaction diluent, preferably an alkanolic diluent, and methanol is particularly preferred. Typical polymerization conditions include a reaction temperature from 20°C to 150°C, preferably from 50°C to 135°C. The reaction pressure is suitably from 1 atmosphere to 200 atmospheres and pressures from 10 atmospheres to 100 atmospheres are preferred. The polyketone polymer is typically obtained as a product substantially insoluble in the reaction diluent and the product is recovered by conventional methods such as filtration or decantation. The polyketone polymer is suitably used as recovered or the polymer may be purified by contact with a solvent or extraction agent which is selective for catalyst residues.

The second component of the blends of the invention is a copolymer of a vinyl aromatic monomer and an acrylonitrile monomer. The copolymers have an acrylonitrile monomer content of greater than 45 wt%, preferably greater than 50 wt%, and most preferably greater than 55 wt%, yet less than 80 wt%, preferably less than 70 wt%, acrylonitrile, based on total copolymer.

The vinyl aromatic monomer component of the copolymer is preferably a compound of the general formula

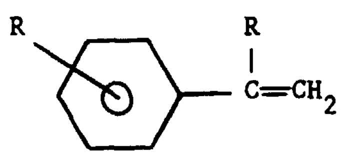

wherein R independently is hydrogen or alkyl of up to 2 carbon atoms inclusive. Illustrative of such vinyl aromatic compounds are styrene, α-methylstyrene, α-ethylstyrene, σ-methylstyrene, and p-ethylstyrene, and mixtures thereof. Styrene and α-methylstyrene are preferred vinyl aromatic compounds of the above formula, and styrene is particularly preferred.

The copolymer of a vinyl aromatic monomer and an acrylonitrile monomer is preferably an amorphous copolymer. Some crystallinity may be present in which case the melting point of the copolymer is preferably less than 250°C. Such copolymers can be melt processed with polyketone polymers without exhibiting stability problems.

The blends of the invention may also include additives such as antioxidants and stabilizers, dyes, fillers or reinforcing agents, fire resistant materials, mould release agents, colorants and other materials designed to improve the processability of the polymers or the properties of the resulting blend. Such additives are added prior to, together with or subsequent to the blending of the polyketone and the copolymer.

The blends of the invention eligibly contain from 1-99 %w of the polyketone polymer and from 99-1 %w of the copolymer of a vinylaromatic monomer and an acrylonitrile monomer, based on the weight of the blend. Preferably the copolymer is present in an amount ranging from 1 to 75 %w, more preferably from 5 to 50 %w.

The method of producing the blends of the invention is not material. Preferably the blends are produced without undue degradation of the blend or its components. In one modification the polymer components of the blend are extruded in a corotating twin screw extruder to produce the blend. In another modification, the polymer components are blended in a mixing device which exhibits high shear. The blends are processed by methods such as extrusion and injection moulding into sheets, films, plates and shaped articles. Illustrative applications are the production of articles

useful in both rigid and flexible packaging, both internal and external parts for the automotive industry, and structural parts for the construction industry.

The invention is further illustrated by the following Examples which should not be regarded as limiting.

Example 1

A linear alternating terpolymer of carbon monoxide, ethylene, and propylene was produced in the presence of a catalyst composition formed from palladium acetate, trifluoroacetic acid and 1,3-bis[bis(2-methoxyphenyl)phosphino] propane. The polyketone polymer had a melting point of 220°C and an LVN of 1.78 dl/g when measured in m-cresol at 60°C. The polyketone polymer contained 0.5% Irganox 1076.

Example 2

Blends were prepared of the polyketone terpolymer of Example 1 and a styrene/acrylonitrile copolymer rich in acrylonitrile, SAN58, a material obtained from Monsanto. The SAN58 was a random copolymer, prepared by free radical polymerization, containing 58 wt% acrylonitrile monomer and 42 wt% styrene monomer. The blends and neat polymer control samples were prepared by the co-precipitation of 3 wt% polymer solutions in hexafluoroisopropanol into a tenfold excess of distilled water with rapid stirring. The precipitates were washed with distilled water and dried under vacuum at 70°C for 24 hours.

The samples were then subjected to thermal analysis using a differential scanning calorimeter. The samples were heated from -150°C to 275°C at a rate of 20°C/min. They were then quenched to -150°C and reheated to 275°C at 20°C/min. The glass transition temperature for each sample was calculated from the scanning made during the second heating.

The miscibility of the two blend components was demonstrated by the glass transition temperatures for the blends. The blends each exhibited a single glass transition temperature, increasing in a nearly linear fashion from the glass transition temperature of polyketone to the glass transition temperature of SAN58, based on the relative proportions of the blend components.

Table 1

| Composition (Polyketone/SAN58, wt%) | Glass Transition Temperature (°C) | |
|---|---|---|
| | Experimental | Calculated |
| 100/0 | 12 | 12 |
| 75/25 | 38 | 32 |
| 50/50 | 66 | 54 |
| 25/75 | 84 | 80 |
| 0/100 | 111 | 111 |

The experimentally observed glass transition temperatures were also compared with those calculated by the Fox equation for a miscible polymer pair ($Tg_{blend}$):

$$\frac{1}{Tg_{blend}} = \frac{w_1}{Tg_1} + \frac{w_2}{Tg_2}$$

wherein $w_1$ and $w_2$ represent the weight fractions of each of the components and $Tg_1$ and $Tg_2$ represent the glass transition temperatures (in degrees Kelvin) of each of the components. The agreement between the experimental values and the calculated values is excellent, and confirms the miscibility of the blends.

The blends also exhibited a cold-crystallization exotherm, immediately following the glass transition during the second heating. The total enthalpy of this exotherm increased with SAN58 content. This result indicates that the kinetics of crystallization of polyketone are retarded by the presence of SAN58 in the melt. This effect is typical of a miscible crystalline/amorphous polymer pair. The phenomenon may be useful to produce an amorphous or "quenched" polyketone material in cases where optical transparency is desired.

Example 3 (for comparison)

A 50/50 blend of the polyketone polymer of Example 1 and a polymethacrylonitrile homopolymer, obtained from

Scientific Polymer Products, was prepared by the coprecipitation of 3 wt% polymer blend solutions in hexafluoroisopropanol into a ten-fold excess of distilled water with rapid stirring. The precipitate was washed with distilled water and dried under vacuum at 70°C for about 24 hours.

The 50/50 blend sample was then subjected to thermal analysis using a differential scanning calorimeter, as described in Example 2. The blend exhibited two glass transition temperatures, one at 25°C (representing the polyketone component of the blend), and one at 110°C (representing the polymethacrylonitrile component of the blend). Thus, the thermal analysis results indicated a non-miscible blend.

## Claims

1. A composition comprising a molecularly miscible blend of (A) a linear alternating polymer of carbon monoxide with at least one ethylenically unsaturated compound, with (B) a copolymer of a vinyl aromatic monomer and acrylonitrile monomer, wherein the copolymer contains from 45 wt% to 80 wt% acrylonitrile monomer, relative to the weight of the copolymer.

2. A composition as claimed in claim 1 wherein the copolymer (B) contains from 55 wt% to 70 wt% acrylonitrile monomer, based on total weight of copolymer.

3. A composition as claimed in claim 1 or 2 wherein the vinyl aromatic monomer is a compound of the general formula

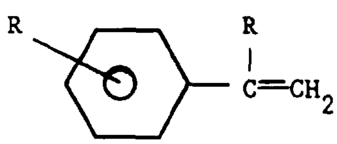

wherein R independently is hydrogen or alkyl of up to 2 carbon atoms.

4. A composition as claimed in claim 3 wherein the vinyl aromatic monomer is styrene.

5. A composition as claimed in any of claims 1-4 wherein the linear alternating polymer is represented by the repeating formula

$$-\left[CO-\left(CH_2-CH_2\right)\right]_x-\left[CO-\left(G\right)\right]_y-$$

wherein G is a moiety of an ethylenically unsaturated hydrocarbon of at least 3 carbon atoms polymerized through the ethylenic unsaturation and the ratio of y:x is less than 0.5.

6. A composition as claimed in claim 5 wherein, in the linear alternating polymer, G is a moiety of propylene and the ratio of y:x is from 0.01 to 0.1.

7. A composition as claimed in claim 5 wherein, in the linear alternating polymer, y is zero.

8. A composition as claimed in any of claims 1-7, wherein the linear alternating polymer has a melting point from 210 °C to 270 °C and a limiting viscosity number, measured in m-cresol at 60 °C, from 0.8 dl/g to 4 dl/g.

9. A composition as claimed in any of claims 1-8, wherein the copolymer (B) is present in an amount ranging from 5 to 50 %w, based on the weight of the blend.

## Patentansprüche

1. Zusammensetzung, enthaltend einen molekular mischbaren Blend aus (A) einem linearen alternierenden Polymer aus Kohlenmonoxid und mindestens einer ethylenisch ungesättigten Verbindung und (B) einem Copolymer aus einem vinylaromatischen Monomer und Acrylnitril-Monomer, welches, bezogen auf das Gewicht des Copolymers, 45 bis 80 Gew.-% Acrylnitril-Monomer enthält.

2. Zusammensetzung nach Anspruch 1, wobei das Copolymer (B) 55 bis 70 Gew.-% Acrylnitril-Monomer, bezogen auf das Gesamtgewicht des Copolymers, enthält.

3. Zusammensetzung nach Anspruch 1 oder 2, wobei es sich bei dem vinylaromatischen Monomer um eine Verbindung der allgemeinen Formel

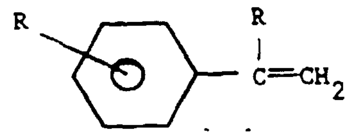

worin R unabhängig voneinander Wasserstoff oder Alkyl mit bis zu 2 Kohlenstoffatomen bedeutet, handelt.

4. Zusammensetzung nach Anspruch 3, wobei es sich bei dem vinylaromatischen Monomer um Styrol handelt.

5. Zusammensetzung nach einem der Ansprüche 1-4, wobei das lineare alternierende Polymer durch die wiederkehrende Formeleinheit

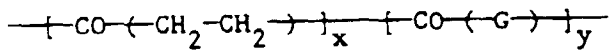

worin G eine über die ethylenische Ungesättigtheit polymerisierte Baugruppe eines ethylenisch ungesättigten Kohlenwasserstoffs mit mindestens 3 Kohlenstoffatomen darstellt und das Verhältnis y:x weniger als 0,5 beträgt, dargestellt wird.

6. Zusammensetzung nach Anspruch 5, wobei in dem linearen alternierenden Polymer G eine Propylenbaugruppe darstellt und das Verhältnis y:x 0,01 bis 0,1 beträgt.

7. Zusammensetzung nach Anspruch 5, wobei in dem linearen alternierenden Polymer y null ist.

8. Zusammensetzung nach einem der Ansprüche 1-7, wobei das lineare alternierende Polymer einen Schmelzpunkt von 210°C bis 270°C und eine Grenzviskositätszahl, gemessen in m-Kresol bei 60°C, von 0,8 dl/g bis 4 dl/g aufweist.

9. Zusammensetzung nach einem der Ansprüche 1-8, wobei das Copolymer (B) in einer Menge im Bereich von 5 bis 50 Gew.-%, bezogen auf das Gewicht des Blends, vorliegt.

**Revendications**

1. Composition comprenant un alliage moléculairement miscible de (A) un polymère alterné linéaire de monoxyde de carbone avec au moins un composé éthyléniquement insaturé, avec (B) un copolymère d'un monomère aromatique vinylique et d'un monomère acrylonitrile, dans laquelle le copolymère contient de 45% en poids à 80% en poids de monomère acrylonitrile par rapport au poids du copolymère.

2. Composition selon la revendication 1, dans laquelle le copolymère (B) contient de 55% en poids à 70% en poids de monomère acrylonitrile, sur la base du poids total du copolymère.

3. Composition selon la revendication 1 ou 2, dans laquelle le monomère aromatique vinylique est un composé de formule générale

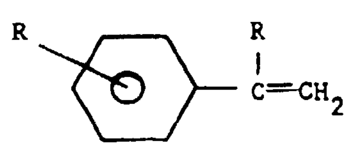

dans laquelle R est indépendamment un hydrogène ou un alkyle ayant jusqu'à 2 atomes de carbone.

**4.** Composition selon la revendication 3, dans laquelle le monomère aromatique vinylique est le styrène.

**5.** Composition selon l'une quelconque des revendications 1-4, dans laquelle le polymère alterné linéaire est représenté par la formule récurrente

$$-\left[CO-\left(CH_2-CH_2\right)\right]_x-\left[CO-\left(G\right)\right]_y-$$

dans laquelle G est un groupement d'un hydrocarbure éthyléniquement insaturé d'au moins 3 atomes de carbone polymérisé par l'intermédiaire de l'insaturation éthylénique et le rapport de y:x est inférieur à 0,5.

**6.** Composition selon la revendication 5, dans laquelle dans le polymère alterné linéaire, G est un groupement de propylène et le rapport de y:x est de 0,01 à 0,1.

**7.** Composition selon la revendication 5, dans laquelle dans le polymère alterné linéaire, y vaut zéro.

**8.** Composition selon l'une quelconque des revendications 1-7, dans laquelle le polymère alterné linéaire a un point de fusion de 210°C à 270°C et une viscosité intrinsèque, mesurée dans le m-crésol à 60°C, de 0,8 dl/g à 4 dl/g.

**9.** Composition selon l'une quelconque des revendications 1-8, dans laquelle le copolymère (B) est présent en une quantité variant de 5 à 50% en poids, sur la base du poids de l'alliage.